# EUROPÄISCHE PATENTSCHRIFT

(11) **EP 2 534 545 B1**
(45) Veröffentlichungstag und Bekanntmachung des Hinweises auf die Patenterteilung: **03.11.2021**
(21) Anmeldenummer: 11703663.2
(22) Anmeldetag: 10.02.2011
(51) Int. Cl.: G05B 19/05

(54) **SCHALTLOGIKMODUL**
SWITCHING LOGIC MODULE
MODULE LOGIQUE DE COMMUTATION

(30) Priorität: 12.02.2010 DE 102010007953
(43) Veröffentlichungstag der Anmeldung: 19.12.2012
(73) Patentinhaber: Phoenix Contact GmbH & Co. KG, 32825 Blomberg (DE)
(72) Erfinder: HAGEMANN, Jörg, 32825 Blomberg (DE); STÖVESAND, Peter, 59302 Oelde (DE)
(74) Vertreter: Michalski Hüttermann & Partner Patentanwälte mbB
(86) Internationale Anmeldenummer: PCT/EP2011/052001
(87) Internationale Veröffentlichungsnummer: WO 2011/098543

(56) Entgegenhaltungen:
- EP-A1- 2 006 753
- EP-A1- 2 214 068
- DE-A1- 10 318 704
- DE-A1- 19 947 837
- DE-U1- 29 720 492
- FR-A1- 2 928 478
- ANONYMOUS: "LIGHTLINK 400 FOUR CHANNEL RS232 MULTIPLEXER - OPERATION MANUAL ver 1.0", , 18. Februar 2003 (2003-02-18), Seiten 1-11, XP002631965, ADVANCED DIGITAL DEVICES, P O BOX 2549, RANDBURG 2125, JOHANNESBURG, REPUBLIC OF SOUTH AFRICA Gefunden im Internet: URL:http://www.addvid.co.za/OS400_Man_A.pd f [gefunden am 2011-04-07]
- ANONYMOUS: "Microcontroller based 16 input (Analog) Multiplexer Card specification document", , Seiten 1-2, XP002631966, C-Systems, 18/14, Ramakrishna Nagar Extn, Alwarthirunagar, Chennai.600 087 Gefunden im Internet: URL:http://www.csystemsindia.com/pdf/Speci fication%20Document_MUX.pdf [gefunden am 2011-04-07]

## Beschreibung

Die Erfindung betrifft ein Schaltlogikmodul mit Multiplex-Funktion, welches Verwendung findet in elektrischen Steuerungen, beispielsweise für den Anlagenbau.

Für dieses Einsatzgebiet ist eine Vielzahl von Lösungen bekannt. Allerdings sind häufig sehr individuelle Probleme zu lösen, für die existierende Produkte nur unbefriedigende Lösungen bieten, sei es, dass sie zu groß oder zu klein dimensioniert sind, nicht die nötige Flexibilität aufweisen oder aber einfach unwirtschaftlich sind.

Dies gilt insbesondere für Kleinstinstallationen, für die sich der Einsatz handelsüblicher Speicherprogrammiereinheiten (SPE) nicht wirtschaftlich realisieren lässt und für die häufig auch nur ein zu geringes Raumangebot zur Verfügung steht. Die derzeit bekannten für dieses Einsatzgebiet verwendbaren Produkte zeichnen sich durch eine in wesentlichen Aspekten einheitliche Bauform aus, welche die Montage auf der Hutschiene handelsüblicher Elektroinstallationsschränke ermöglicht.

Die DE 10 2007 006 830 A1 beschreibt ein Steuer- und/oder Datenübertragungsmodul, welches zur Ansteuerung von benachbarten Eingabe/Ausgabe-Modulen (E/A-Modulen) dient und zur Herstellung der mechanischen und der elektrischen Verbindung auf die Module aufgesteckt wird. Dabei wird über einen ersten Anschluss wenigstens ein Signalkanal mit einem Datenbus und über wenigstens einen zweiten Anschluss einen Busteilnehmer mit dem Signalkanal verbunden.

Weiterhin ist aus der DE 43 23 440 A1 ein Automatisierungsgerät mit einem Grundgerät und einer Einrichtung zum Anschluss externer Leitungen bekannt. Das Grundgerät kann über einen Kabelanschluss mit dem Automatisierungsgerät, beispielsweise einem PC, gekoppelt werden. Diese Kopplung kann über eine serielle Schnittstelle erfolgen.

Ferner sind aus dem Stand der Technik Multiplexer in verschiedenen Ausgestaltungen bekannt, wozu auf die DE 297 20 492 U1, die DE 103 18 704 B4 und die US 6,308,231 verwiesen wird. Außerdem ist aus der US 7,228,186 B2 ein Steuergerät bekannt, bei dem jeweils mehrere mit Sensoren 1 bis N verbundene Eingänge über einen Multiplexer mit einem A/D-Wandler und einem nachgeschalteten Bus verbunden sind. Außerdem ist in der FR 2 928 478 A1 ein Kommunikationsmodul beschrieben, das mit einer industriellen Einrichtung verbunden werden kann.

Schließlich beschreibt die nachveröffentlichte EP 2 214 068 A1 ein Automatisierungssystem zur Führung eines technischen Prozesses, mit einer elektronischen Verarbeitungseinheit, E/A-Modulen zur Ein- und Ausgabe von Prozesssignalen an Betriebsmittel des technischen Prozesses, Klemmenbausteinen zum Anschluss der Betriebsmittel an die E/A-Module und einem programmierbaren Matrixmodul, wobei von der Verarbeitungseinheit einem oder mehreren Klemmenbausteinen dynamisch ein oder mehrere E/A-Module verschaltungstechnisch zugeordnet werden können.

Es ist die Aufgabe der Erfindung, eine raumsparende und kostengünstige Lösung anzugeben, mit der bei geringem Installationsaufwand und großer Flexibilität mehrere elektrische Signale zyklisch auf einen Ausgang geschaltet werden können.

Die Lösung der Aufgabe erfolgt erfindungsgemäß durch die Merkmale des Anspruchs 1. Vorteilhafte Ausgestaltungen der Erfindung sind in den Unteransprüchen angegeben.

Typischerweise sind dabei parallel nebeneinander angeordnete E/A-Module vorgesehen. Ferner ist vorzugsweise vorgesehen, dass das Schaltlogikmodul mit den E/A-Modulen direkt verbindbar ist.

Mit anderen Worten wird also vorgeschlagen, ein Multiplex-Modul auf die nebeneinander liegende Kontakte beispielsweise aufzustecken. Dabei wird der Ausgang des Moduls vorzugsweise als elektrischer Kontakt ausgeführt, von dem das Multiplexgerät aus abgegriffen werden kann.

Alternativ oder zusätzlich dazu ist der Ausgang vorzugsweise aber auch als Funksendeempfangseinrichtung ausgeführt, über die ohne jede weitere Verkabelung über Standard-Funklösungen, wie beispielsweise Bluetooth, WLAN oder DECT, das Multiplex-Signal übertragen werden kann.

Dabei ist es ferner vorteilhaft, die Schaltzeiten des Zyklus der Multiplex-Logik konfigurierbar auszuführen. Besonders platzsparend kann dies über DIP-Schalter erfolgen.

Erfindungsgemäß ist vorgesehen, dass die Anzahl der vom Schaltlogikmodul verbindbaren E/A-Module konfigurierbar ist, wodurch eine breitere Anwendbarkeit erreicht wird. Vom Schaltlogikmodul überspannte, aber nicht erforderliche E/A-Module können dabei preisgünstig durch einfache Durchgangklemmen gleicher Gehäuseform ersetzt werden.

Erfindungsgemäß ist dabei die Anzahl der verbindbaren E/A-Module ebenfalls über DIP-Schalter einstellbar. Gegenüber programmierbaren Lösungen bietet der DIP-Schalter den Vorteil, vom Status her direkt ablesbar zu sein. Des Weiteren ist bei der Verwendung von DIP-Schaltern zur Konfiguration kein elektrisches Programmier-Interface erforderlich.

Vorzugsweise ist das Schaltlogikmodul ferner derart ausgeführt, dass ein jeweiliger Schaltzustand signalisierbar ist und somit ersichtlich gemacht und/oder einer Auswertelogik zur Interpretation des Ausgangssignals zugeführt werden kann.

Vorzugsweise erfolgt dies in binärer Codierung des Schalterzustandes digital über eine entsprechende Anzahl von Signalisierungsausgängen und/oder LEDs.

Die Energieversorgung des Schaltlogikmoduls erfolgt vorzugsweise über die Signalisierungsleitungen, z.B. dem Multiplexausgang, so dass kein zusätzlicher Kontaktierungsaufwand zur Energieversorgung erforderlich ist.

Nachfolgend wird die Erfindung unter Bezugnahme auf die Zeichnung anhand bevorzugter Ausführungsformen näher erläutert.

Es zeigen
- Fig. 1: ein erstes Ausführungsbeispiel des erfindungsgemäßen Schaltlogikmoduls als Aufsteckmodul für acht nebeneinander auf einer Hutschiene montierte E/A-Module
- Fig. 2: ein Prinzipschaltbild der Funktion eines Ausführungsbeispiels des Schaltlogikmoduls und
- Fig. 3: ein Anwendungsbeispiel des erfindungsgemäßen Schaltlogikmoduls bei der Überwachung mehrere Motortemperatursensoren.

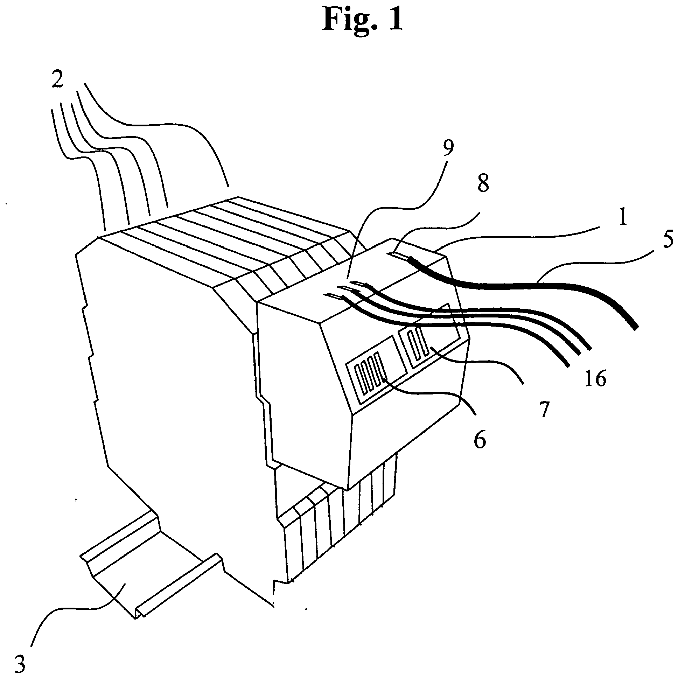

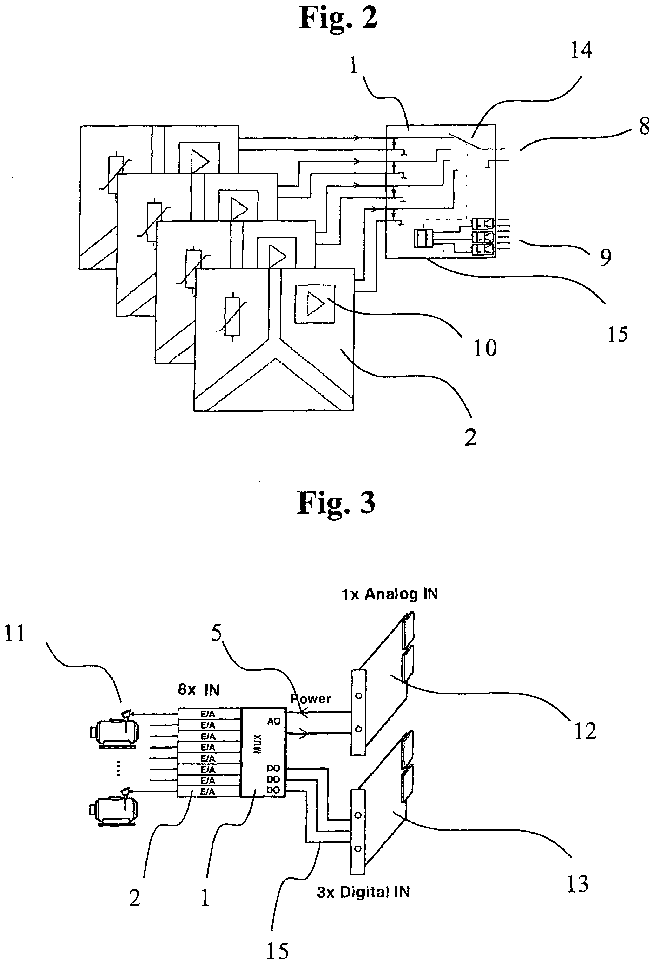

Fig. 1 zeigt acht auf einer Hutschiene 3 nebeneinander angeordnete E/A-Module 2, welche von einem Schaltlogikmodul 1 überspannt werden. Den acht E/A-Modulen 2 ist je eine Signalleitung 4 zugeführt, und von dem Schaltlogikmodul 1 geht eine Ausgangsleitung 5 ab. Innerhalb eines jeweiligen E/A-Moduls 2 kann dieses Signal beispielsweise über aus Fig. 2 ersichtliche Trennverstärker 10 verstärkt, mit anderen möglichen Funktionen des E/A-Moduls (z.B. Timer, Verzögerungsglieder oder Logik) verknüpft, oder auch einfach nur durch dieses hindurchgeführt werden. Das Signal wird auf einen hier nicht dargestellten elektrischen Kontakt geleitet, z. B. eine elektrische Klemme oder eine elektrische Buchse.

Das Gehäuse des Schaltlogikmoduls 1 ist vorliegend komplementär zu den Gehäuseformen der E/A-Module 2 derart ausgebildet, dass es formschlüssig an diesen befestigbar ist und damit an diesen einen natürlichen mechanischen Halt aufweist. Passend zu elektrischen Klemmen oder elektrischen Buchsen der E/A-Module 2 weist das Schaltlogikmodul 1 nicht weiter dargestellte Stecker auf, welcher passgenau in die Klemmen bzw. Buchsen der E/A-Module 2 eingeführt werden können und sowohl eine mechanische Fixierung als auch eine elektrische Verbindungen gewährleisten.

Fig. 2 zeigt ein Prinzipschaltbild der Funktion des Schaltlogikmoduls gemäß dem vorliegend beschriebenen bevorzugten Ausführungsbeispiel der Erfindung. In dieser Figur sind der Multiplexer als logische Funktion des Schaltlogikmoduls 1 sowie der hier exemplarisch dargestellten vier E/A-Module 2 gezeigt. Die Signale der E/A-Module 2 werden den Schaltkontakten des Multiplexers zugeführt. Der Multiplexer weist einen Schalter 14 auf, der die Eingänge des Schaltlogikmoduls zyklisch mit dem Ausgang 8 des Schaltlogikmoduls verbindet. Dieser Schalter wird durch einen Mikro-Controller 15 gesteuert, wobei der Schaltzustand des Schalters 14 zusätzlich an die Signalisierungsausgänge 16 signalisiert wird.

Fig. 3 zeigt ein Anwendungsbeispiel des erfindungsgemäßen Schaltlogikmoduls 1 bei der Überwachung mehrerer Motortemperatursensoren 11. Die Sensorsignale der Motortemperatursensoren 11 sind acht E/A-Modulen 2 zugeführt, von denen die Sensorsignale über das Schaltlogikmodul 1 über einen Analog-Ausgang 8 einer Auswerteeinheit 12 zugeführt werden.

Desweiteren ist der Schaltzustand der acht möglichen Schalterstellungen des Schaltlogikmoduls binär codiert über drei digitale Leitungen 16 mit einer Steuer- und/oder Auswerteeinheit 13 verbunden. Die Energieversorgung des Moduls erfolgt über den analogen Signalisierungsausgang 8.

**Bezugszeichenliste**

| | |
|---|---|
| Schaltlogikmodul | 1 |
| E/A-Module | 2 |
| Hutschiene | 3 |
| Signalleitung | 4 |
| Ausgangsleitung | 5 |
| DIP - Schalter Schaltzeitkonfiguration | 6 |
| DIP - Schalter Modulzahlkonfiguration | 7 |
| Ausgang | 8 |
| Schaltzustandsausgang | 9 |
| Trennverstärker | 10 |
| Motortemperatursensoren | 11 |
| Auswerteeinheit | 12 |
| Steuer- und/oder Auswerteeinheit | 13 |
| Schalter | 14 |
| Mikro-Controller | 15 |
| Signalisierungsleitung | 16 |

## Patentansprüche

1. Anordnung mit einem Schaltlogikmodul (1) und E/A-Modulen (2), mit denen das Schaltlogikmodul (1) elektrisch und mechanisch lösbar verbunden ist, wobei
die E/A-Module (2) auf einer Hutschiene (3) nebeneinander angeordneten sind und von dem Schaltlogikmodul (1) überspannt werden,
die E/A-Module (2) jeweils wenigstens einen elektrischen Kontakt aufweisen und die mechanische Verbindung über die elektrischen Kontakte erzielt ist,
das Schaltlogikmodul (1) eine Multiplexlogik aufweist, mit welcher die elektrischen Kontakte der E/A-Module (2) zyklisch jeweils für eine vorbestimmte Schaltzeit mit einem Ausgang (8) des Schaltlogikmoduls (1) verbindbar sind,
das Gehäuse des Schaltlogikmoduls (1) komplementär zu den Gehäuseformen der E/A-Module (2) derart ausgebildet ist, dass es formschlüssig an diesen befestigt ist und damit an diesen einen natürlichen mechanischen Halt aufweist,
das Schaltlogikmodul (1) passend zu elektrischen Klemmen oder elektrischen Buchsen der E/A-Module (2) Stecker aufweist, welche passgenau in die Klemmen bzw. Buchsen der E/A-Module (2) eingeführt sind und sowohl eine mechanische Fixierung als auch eine elektrische Verbindung gewährleisten, und
die Anzahl der mit dem Schaltlogikmodul verbundenen E/A-Module (2) über DIP-Schalter (7) konfigurierbar ist.

2. Anordnung nach Anspruch 1, wobei der Ausgang (8) des Schaltlogikmoduls (1) einen elektrischen Kontakt, vorzugsweise eine Klemme oder einen Steckkontakt, aufweist.

3. Anordnung nach Anspruch 1 oder 2, wobei der Ausgang (8) des Schaltlogikmoduls (1) eine Funkeinrichtung aufweist.

4. Anordnung nach einem der vorherigen Ansprüche, wobei die Multiplexlogik derart ausgestaltet ist, dass die Schaltzeit konfigurierbar ist.

5. Anordnung nach einem der vorherigen Ansprüche, wobei das Schaltlogikmodul eine Signalisiereinrichtung aufweist, mit der jeweilige Schaltzustand der Multiplexlogik signalisierbar ist.

6. Anordnung nach Anspruch 5, wobei die Signalisiereinrichtung einen, vorzugsweise elektrischen, Schaltzustandsausgang (9) aufweist, mit dem der Schaltzustand, vorzugsweise binär, signalisierbar ist.

7. Anordnung nach Anspruch 5 oder 6, wobei eine digitale Signalisierung des Schaltzustandes vorgesehen ist.

8. Anordnung nach Anspruch 7, wobei der Schaltzustand über elektrische Schaltzustandsausgänge (9) und/oder LEDs signalisierbar ist.

9. Anordnung nach einem der vorherigen Ansprüche, wobei die Energieversorgung des Schaltlogikmoduls über eine Ausgangsleitung (5) oder eine Signalisierungsleitung (16) vorgesehen ist.

## Claims

1. A system comprising a switch logic module (1) and I/O modules (2) to which the switch logic module (1) is mechanically and electrically detachably connected,
the I/O modules (2) being arranged next to each other on a DIN rail (3) and spanned by the switch logic module (1),
the I/O modules (2) each comprising at least one electrical contact, and the mechanical connection being establishable using the electrical contacts,
the switch logic module (1) comprising a multiplex logic that can be used to cyclically connect the electrical contacts of the I/O modules (2) for a predefined switch time to an output (8) of the switch module (1),
the housing of the switch logic module (1) being designed so as to complement the housing shapes of the I/O modules (2) so as to be attached thereto in a form-locked manner and thereby providing a natural mechanical secure fit thereon,
fitting electrical terminals or electrical bushings of the I/O modules (2), the switch logic module (1) comprising connectors, which are inserted into the terminals or bushings of the I/O modules (2) with precise fit and not only ensure mechanical fixation but also an electrical connection, and
the number of I/O modules (2) connected by the switch logic module being configurable using DIP switches (7).

2. The system according to claim 1, wherein the output (8) of the switch logic module (1) comprises an electrical contact, preferably a terminal or a plug-in contact.

3. The system according to claim 1 or 2, wherein the output (8) of the switch logic module (1) comprises a wireless device.

4. A system according to any one of the preceding claims, wherein the multiplex logic is designed in such a way that the switch time can be configured.

5. A system according to any one of the preceding claims, wherein the switch logic module comprises a signaling device that can be used to signal the applicable switch state of the multiplex logic.

6. The system according to claim 5, wherein the signaling device comprises a, preferably electrical, switch state output (9) that can be used to signal the switch state, preferably in a binary manner.

7. The system according to claim 5 or 6, wherein digital signaling of the switch state is provided.

8. The system according to claim 7, wherein the switch state can be signaled using electrical switch state outputs (9) and/or LEDs.

9. The system according to any one of the preceding claims, wherein the power supply of the switch logic module is provided using an output line (5) or a signaling line (16).

## Revendications

1. Ensemble avec un module logique de commutation (1) et des modules E/S (2), avec lesquels le module logique de commutation (1) est relié électriquement et mécaniquement de manière amovible, où
les modules E/S (2) sont disposés les uns à côté des autres sur un profilé chapeau (3) et sont recouverts par le module logique de commutation (1),
les modules E/S (2) présentent respectivement au moins un contact électrique et la liaison mécanique est réalisée par le biais des contacts électriques,
le module logique de commutation (1) présente une logique de type multiplex avec laquelle les contacts électriques des modules E/S (2) peuvent être reliés de manière cyclique respectivement pour une durée de commutation prédéterminée avec une sortie (8) du module logique de commutation (1),
le boitier du module logique de commutation (1) est conçu complémentaire aux formes de boitier des modules E/S (2) de telle manière qu'il est fixé à ceux-ci par complémentarité des formes et présente de ce fait une tenue mécanique naturelle sur ceux-ci,
le module logique de commutation (1) présente des connecteurs adaptés à des bornes électriques ou à des prises électriques des modules E/S (2), lesquels sont insérés de manière parfaitement adaptée dans les bornes, respectivement prises, des modules E/S (2) et assurent à la fois une fixation mécanique et une liaison électrique, et
le nombre de modules E/S (2) reliés avec le module logique de commutation peut être configuré par le biais de commutateurs DIP (7) .

2. Ensemble selon la revendication 1, dans lequel la sortie (8) du module logique de commutation (1) présente un contact électrique, de préférence, une borne ou un contact enfichable.

3. Ensemble selon la revendication 1 ou la revendication 2, dans lequel la sortie (8) du module logique de commutation (1) présente un dispositif radio.

4. Ensemble selon l'une des revendications précédentes, dans lequel la logique de type multiplex et conçue de telle manière que la durée de commutation peut être configurée.

5. Ensemble selon l'une des revendications précédentes, dans lequel le module logique de commutation présente un dispositif de signalisation avec lequel l'état de commutation respectif de la logique de type multiplex peut être signalé.

6. Ensemble selon la revendication 5, dans lequel le dispositif de signalisation présente de préférence une sortie d'état de commutation (9) électrique, avec laquelle l'état de commutation, de préférence binaire, peut être signalé.

7. Ensemble selon la revendication 5 ou la revendication 6, dans lequel une signalisation numérique de l'état de commutation est prévue.

8. Ensemble selon la revendication 7, dans lequel l'état de commutation peut être signalé par le biais de sorties d'état de commutation (9) électriques et/ou des DEL.

9. Ensemble selon l'une des revendications précédentes, dans lequel l'alimentation en énergie du module logique de commutation est prévue par le biais d'une ligne de sortie (5) ou d'une ligne de signalisation (16).
